# EUROPEAN PATENT APPLICATION

(11) **EP 4 520 791 A1**
(43) Date of publication of application: **12.03.2025**
(21) Application number: 22940786.1
(22) Date of filing: 27.12.2022
(51) Int. Cl.: C08L 67/02, C08L 77/06, C08K 5/12, C08K 3/34, C08K 3/04, B29C 45/00

(54) **SKIN WITH PROTRUSIONS ON SURFACE**

(30) Priority: 06.05.2022 CN 202210484673
(71) Applicant: Yanfeng International Automotive Technology Co., Ltd., Shanghai 201306 (CN)
(72) Inventor: WANG, Liyong, Shanghai 201306 (CN); SHI, Jie, Shanghai 201306 (CN); SUN, Jie, Shanghai 201306 (CN); GU, Jing, Shanghai 201306 (CN); WEI, Jing, Shanghai 201306 (CN)
(74) Representative: Onsagers AS
(86) International application number: PCT/CN2022/142251
(87) International publication number: WO 2023/213092

(57) **Abstract**

The present invention relates to a skin with protrusions on a surface, and a component with the skin for use in the interior of a vehicle. The present invention further relates to a forming method for the component. The present invention comprises: a base layer with an upper surface; and a plurality of microscopic protrusions spaced apart and distributed in at least a part of the area of the upper surface, which enables the upper surface of the base layer to be configured as a suede surface. The skin is formed by integrated injection molding of a material comprising a thermoplastic elastomer and a compatible resin.

## Description

### Technical field

The present invention relates to a skin with protrusions on surface and a component with the skin for use in the interior of an automobile. The present invention also relates to a method for shaping the component.

### Background art

Injection molding is a method of producing shapes for industrial products. Products are usually made using rubber injection molding and plastic injection molding. Injection molding can also be divided into compression molding method and die casting method. Injection molding machine (abbreviated as injection machine) is the main molding equipment that uses plastic molding molds to make plastic articles of various shapes from thermoplastics or thermosetting materials. Injection molding is achieved through injection molding machines and molds.

Skin is ubiquitous in people's daily lives and has become an indispensable product. However, currently many skins on the market are made of plastic materials such as polyethylene or polypropylene, which cannot provide a good soft touch in daily use. There is therefore a need in the art for a skin that exhibits a good soft touch.

### Disclosure of the invention

The present invention provides a skin with protrusions on surface so that the obtained skin exhibits a better soft touch, which is specifically manifested in improved dynamic/static friction coefficients and maximum acceleration.

In the skin of the present invention, the functions of the surface protrusions are: 1) the contact area between the sample surface and the fingers is reduced; and 2) the protrusions deform at the surface as the fingers press and stroke, thereby reducing frictional resistance, and the protrusions' morphology then rebounds and recovers.

According to one aspect, the present invention relates to a skin for use in the interior of an automobile, characterized in that the skin comprises: a base layer having an upper surface; and a plurality of microscopic protrusions spaced apart and distributed on at least a part of the region of the upper surface so that the upper surface of the base layer is configured as a suede; and the skin is formed by integral injection molding of a material comprising a thermoplastic elastomer and a compatible resin.

According to a preferred embodiment of the present invention, it is characterized in that the height of the microscopic protrusions ranges from 20 to 400 µm, preferably from 40 to 250 µm.

According to a preferred embodiment of the present invention, it is characterized in that the width or diameter of the bottom of the microscopic protrusions is 10 to 300 µm, preferably 30 to 200 µm.

According to a preferred embodiment of the present invention, it is characterized in that the microscopic protrusions are papillary protrusions, which have a smaller width or diameter near the top, the width or diameter near the top is 3 to 50 µm, preferably 5 to 30 µm.

According to a preferred embodiment of the present invention, it is characterized in that the microscopic protrusions are uniformly distributed protrusions.

According to a preferred embodiment of the present invention, it is characterized in that the spacing between the microscopic protrusions is 30 to 400 µm.

According to a preferred embodiment of the present invention, it is characterized in that the spacing between the tops of the microscopic protrusions is 50 to 300 µm.

According to a preferred embodiment of the present invention, it is characterized in that the spacing between the bottoms of the microscopic protrusions is 30 to 300 µm.

According to a preferred embodiment of the present invention, it is characterized in that the thickness of the base layer is 0.5 to 5 mm.

According to a preferred embodiment of the present invention, it is characterized in that the base layer comprises micropores.

According to a preferred embodiment of the present invention, it is characterized in that the skin further comprises a coating applied on the surface of the microscopic protrusions and on the upper surface of the base layer between the microscopic protrusions.

According to a preferred embodiment of the present invention, it is characterized in that the coating comprises at least one of a waterborne polyurethane system and an acrylic system.

According to a preferred embodiment of the present invention, it is characterized in that the dry film thickness of the coating is 6 to 15 µm.

According to a preferred embodiment of the present invention, it is characterized in that the material comprises 20 to 97 weight percent of the thermoplastic elastomer and 0 to 70 weight percent of the compatible resin.

According to a preferred embodiment of the present invention, it is characterized in that the thermoplastic elastomer is at least one selected from the group consisting of: thermoplastic polyurethane elastomer, thermoplastic polyester elastomer, thermoplastic polystyrene elastomer, thermoplastic vulcanizate (TPV) elastomer, polyamide elastomer, thermoplastic 1,2-polybutadiene elastomer, thermoplastic trans-1,4-polyisoprene elastomer, thermoplastic ethylene-vinyl acetate elastomer, blended thermoplastic elastomer of polyethylene and ethylene-vinyl ester copolymer, thermoplastic ethylene-octene copolymer elastomer, thermoplastic ethylene-styrene copolymer elastomer, EPDM rubber-based thermoplastic elastomer, blended thermoplastic elastomer of polyethylene and natural rubber, and blended thermoplastic elastomer of polyethylene and hydrogenated styrene butadiene rubber; preferably at least one selected from the group consisting of: thermoplastic polyurethane elastomer, thermoplastic polyester elastomer, thermoplastic polystyrene elastomer, thermoplastic vulcanizate (TPV) elastomer, and polyamide elastomer.

According to a preferred embodiment of the present invention, it is characterized in that the compatible resin is at least one selected from the group consisting of: polyolefins, polyvinyl chloride, styrene resins, acrylic resins, polyamide resins, fluororesin, polycarbonates, polyesters, polyether, polysulfone, and polyether ketones; preferably at least one selected from the group consisting of: polyolefins, polyamide resins or combinations thereof, and more preferably polyethylene, polypropylene, and polyamide resins.

According to a preferred embodiment of the invention, it is characterized in that the base layer comprises a three-dimensional structure formed during the injection molding process.

According to a preferred embodiment of the present invention, it is characterized in that the protrusion is configured to move between a vertical position and an inclined position, and when subjected to an external force, the protrusion moves from the vertical position to the inclined position; when the external force disappears, the protrusion returns from the inclined position to the vertical position.

According to a preferred embodiment of the present invention, it is characterized in that as measured according to the German automotive industry standard, i.e., VDA230-206 Stick-slip test standard, the maximum dynamic friction coefficient of the skin is 0.30 to 1.30, preferably 0.40 to 1.00; the maximum static friction coefficient is 0.20 to 1.70, preferably 0.40 to 1.00; and the maximum acceleration is 0.1 to 2.1, preferably 0.40 to 1.50.

The present invention also relates to a component with the skin of any one of the preceding claims for use in the interior of an automobile.

According to a preferred embodiment of the present invention, it is characterized in that the component further comprises a framework connected to the skin for supporting the skin.

According to a preferred embodiment of the present invention, it is characterized in that the component further comprises an adhesive or foaming layer located between the framework and the skin.

The present invention further relates to a method for shaping an automotive interior component having a skin, the method comprising:
providing a mold having a movable mold and a fixed mold, wherein at least a part of the region of the inner surface of the fixed mold has a plurality of micropores spaced apart and distributed;
clamping the movable mold and the fixed mold to form a cavity, and injecting a material to fill the cavity and the micropores, wherein the material comprises a thermoplastic elastomer and a compatible resin;
cooling to form the base layer of the skin from the material in the cavity, with the inner surface of the fixed mold fitting the upper surface of the base layer; and to form from the material in the micropores a plurality of microscopic protrusions spaced apart and distributed on at least a part of the region of the upper surface, so that the upper surface of the base layer is configured as a suede.

According to a preferred embodiment of the present invention, it is characterized in that the material further comprises a blowing agent for forming micropores.

According to a preferred embodiment of the present invention, it is characterized in that before injecting the material to fill the cavity and the micropores, a framework is provided on the movable mold so that the framework is accommodated in the cavity.

According to a preferred embodiment of the present invention, it is characterized in that the shaping method further comprises taking the skin out of the mold and then connecting it to the framework via an adhesive or foaming layer.

The present application further relates to the following embodiments:
1. A skin for use in the interior of an automobile, characterized in that the skin comprises:
   a base layer having an upper surface; and
   a plurality of microscopic protrusions spaced apart and distributed on at least a part of the region of the upper surface so that the upper surface of the base layer is configured as a suede; and
   the skin is formed by integral injection molding of a material comprising a thermoplastic elastomer and a compatible resin.
2. The skin according to embodiment 1, characterized in that the height of the microscopic protrusions ranges from 20 to 400 µm, preferably from 40 to 250 µm.
3. The skin according to embodiment 1, characterized in that the width or diameter of the bottom of the microscopic protrusions is 10 to 300 µm, preferably 30 to 200 µm.
4. The skin according to embodiment 1, characterized in that the microscopic protrusions are papillary protrusions, which have a smaller width or diameter near the top, and the width or diameter near the top is 3 to 50 µm, preferably 5 to 30 µm.
5. The skin according to embodiment 1, characterized in that the microscopic protrusions are uniformly distributed protrusions.
6. The skin according to embodiment 1, characterized in that the spacing between the microscopic protrusions is 30 to 400 µm.
7. The skin according to embodiment 1, characterized in that the spacing between the tops of the microscopic protrusions is 50 to 300 µm.
8. The skin according to embodiment 1, characterized in that the spacing between the bottoms of the microscopic protrusions is 30 to 300 µm.
9. The skin according to embodiment 1, characterized in that the thickness of the base layer is 0.5 to 5 mm.
10. The skin according to embodiment 1, characterized in that the base layer comprises micropores.
11. The skin according to embodiment 1, characterized in that the skin further comprises a coating applied on the surface of the microscopic protrusions and on the upper surface of the base layer between the microscopic protrusions.
12. The skin according to embodiment 11, characterized in that the coating comprises at least one of a waterborne polyurethane system and an acrylic system.
13. The skin according to embodiment 11, characterized in that the dry film thickness of the coating is 6 to 15 µm.
14. The skin according to embodiment 1, characterized in that the material comprises 20 to 97 weight percent of the thermoplastic elastomer and 0 to 70 weight percent of the compatible resin.
15. The skin according to embodiment 1, characterized in that the thermoplastic elastomer is at least one selected from the group consisting of: thermoplastic polyurethane elastomer, thermoplastic polyester elastomer, thermoplastic polystyrene elastomer, thermoplastic vulcanizate (TPV) elastomer, polyamide elastomer, thermoplastic 1,2-polybutadiene elastomer, thermoplastic trans-1,4-polyisoprene elastomer, thermoplastic ethylene-vinyl acetate elastomer, blended thermoplastic elastomer of polyethylene and ethylene-vinyl ester copolymer, thermoplastic ethylene-octene copolymer elastomer, thermoplastic ethylene-styrene copolymer elastomer, EPDM rubber-based thermoplastic elastomer, blended thermoplastic elastomer of polyethylene and natural rubber, and blended thermoplastic elastomer of polyethylene and hydrogenated styrene butadiene rubber; preferably at least one selected from the group consisting of: thermoplastic polyurethane elastomer, thermoplastic polyester elastomer, thermoplastic polystyrene elastomer, thermoplastic vulcanizate (TPV) elastomer, and polyamide elastomer.
16. The skin according to embodiment 1, characterized in that the compatible resin is at least one selected from the group consisting of: polyolefins, polyvinyl chloride, styrene resins, acrylic resins, polyamide resins, fluororesin, polycarbonates, polyesters, polyether, polysulfone, and polyether ketones; preferably at least one selected from the group consisting of: polyolefins, polyamide resins or combinations thereof, and more preferably polyethylene, polypropylene, and polyamide resins.
17. The skin according to embodiment 1, characterized in that the base layer comprises a three-dimensional structure formed during the injection molding process.
18. The skin according to embodiment 1, characterized in that the protrusion is configured to move between a vertical position and an inclined position, and when subjected to an external force, the protrusion moves from the vertical position to the inclined position; when the external force disappears, the protrusion returns from the inclined position to the vertical position.
19. The skin according to embodiment 1, characterized in that as measured according to the German automotive industry standard, i.e., VDA230-206 Stick-slip test standard, the maximum static friction coefficient of the skin is 0.20 to 1.70, preferably 0.40 to 1.00.
20. The skin according to embodiment 1, characterized in that the viscosity number of the thermoplastic elastomer measured according to ISO 307 is 67 to 135 ml/g, preferably 85 to 100 ml/g.
21. A component with the skin of any one of the preceding embodiments for use in the interior of an automobile.
22. The component according to embodiment 21, characterized in that the component further comprises a framework connected to the skin for supporting the skin.
23. The component according to embodiment 21, characterized in that the component further comprises an adhesive or foaming layer located between the framework and the skin.
24. A method for shaping an automotive interior component having a skin, the method comprising:
   providing a mold having a movable mold and a fixed mold, wherein at least a part of the region of the inner surface of the fixed mold has a plurality of micropores spaced apart and distributed;
   clamping the movable mold and the fixed mold to form a cavity, and injecting a material to fill the cavity and the micropores, wherein the material comprises a thermoplastic elastomer and a compatible resin;
   cooling to form the base layer of the skin from the material in the cavity, with the inner surface of the fixed mold fitting the upper surface of the base layer; and forming a plurality of microscopic protrusions spaced apart and distributed on at least a part of the region of the upper surface from the material in the micropores so that the upper surface of the base layer is configured as a suede.
25. The shaping method according to embodiment 24, characterized in that the material further comprises a blowing agent for forming micropores.
26. The shaping method according to embodiment 24, characterized in that before injecting the material to fill the cavity and the micropores, a framework is provided on the movable mold so that the framework is accommodated in the cavity.
27. The shaping method according to embodiment 24, characterized in that the shaping method further comprises taking the skin out of the mold and then connecting it to the framework via an adhesive or foaming layer.

### Description of drawings

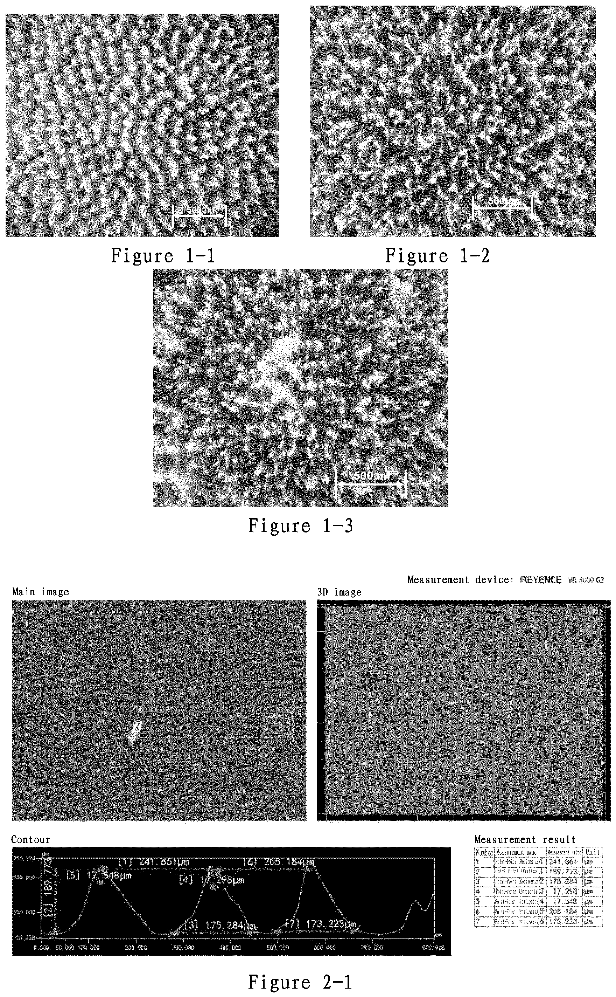

Figures 1-1, 1-2, and 1-3 are micrographs (black and white photos) of several different papillae, all of which are injection molded with TPE substrate.
Figure 1-1: Appearance of uniformly distributed independent papillae.
Figure 1-2: Appearance of uniformly distributed peaked papillae.
Figure 1-3: Appearance of unevenly distributed peaked papillae.

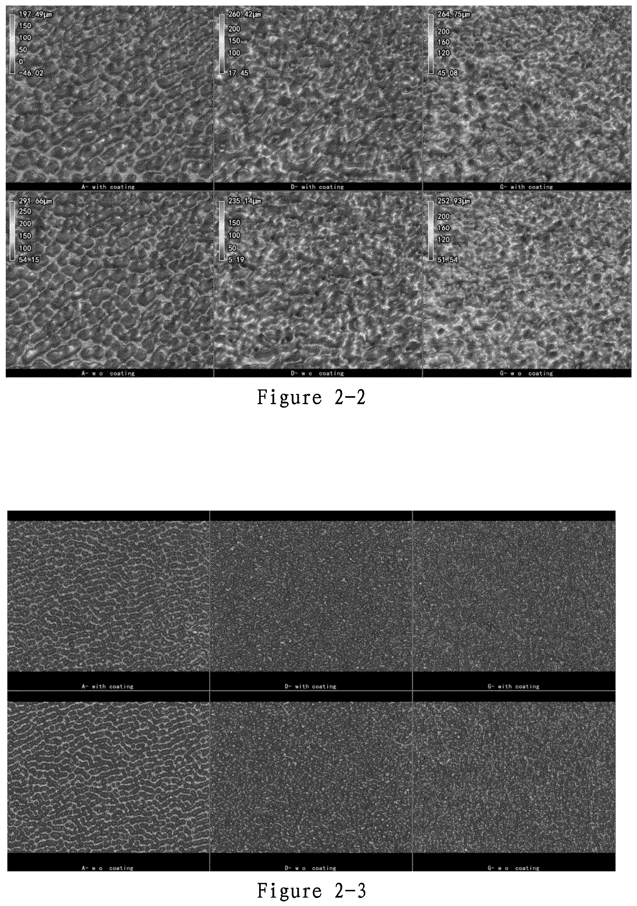

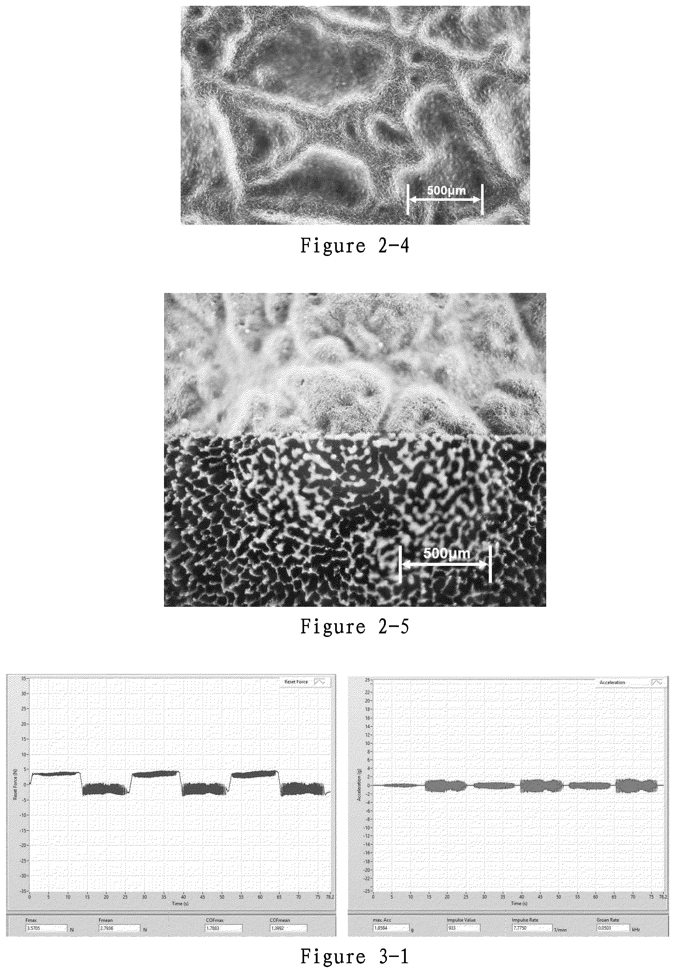

Figure 2-1: 3D scanned photo of uniformly distributed independent papillae injection molded with TPE substrate, showing the 3D dimensions, wherein the digital area on the plane main image represents the sampling positions of Nos. 1 to 6; the 3D image displays the 3D image of the main image; the contour image displays the peak and trough sizes of the sampled magnified area, and the table displays the point-to-point straight-line distance of Nos. 1 to 6.
Figure 2-2: Microscopic 3D morphology of samples A, D, and G with and without coating on the surface, wherein A is a structure of uniformly distributed independent papillae, D is a structure of uniformly distributed peaked papillae, and G is a structure of unevenly distributed peaked papillae, the three pictures above are respectively A, D, G with coating (with coating) and A, D, G without coating (w/o coating).
Figure 2-3: Microscopic black and white planar morphology of samples A, D, and G with and without coating on the surface.
Figure 2-4: Animal texture on the inner cavity of the mold.
Figure 2-5: The upper part of the picture showing ordinary animal texture, and the lower part showing microscopic peaked papillae (black and white picture).
Figure 3-1: Changes in surface force value and surface acceleration, under the working condition of high friction resistance.
Figure 3-2: Changes in surface force value and surface acceleration, under the working condition of medium friction resistance.
Figure 3-3: Changes in surface force value and surface acceleration, under the working condition of low friction resistance.
Figure 4: Relationship between physical property and cost of different common types of elastomers.
Figure 5: Structure of SEBS thermoplastic elastomers (a, c = 50-80, b = 20~100).
Figure 6: Structure of TPEE based thermoplastic elastomers.
Figure 7: Hardness of thermoplastic elastomers.
Figure 8-1: Appearance of a common animal skin pattern, black and white picture.

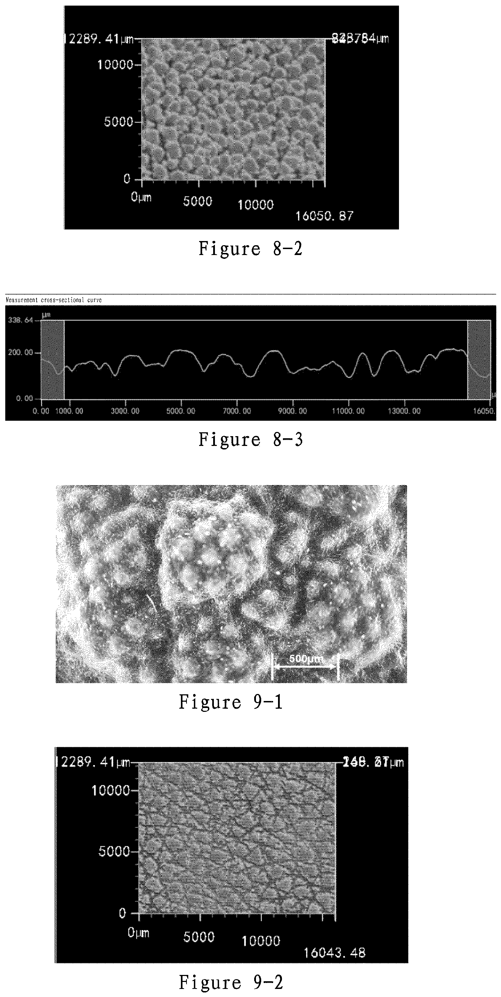

Figure 8-2: Appearance of a common animal skin pattern.
Figure 8-3: Cross-sectional curve of a common animal skin pattern.
Figure 9-1: Small bumps forming micro-texture on the surface, black and white picture.
Figure 9-2: A common animal skin pattern, microweb formed by small bumps.

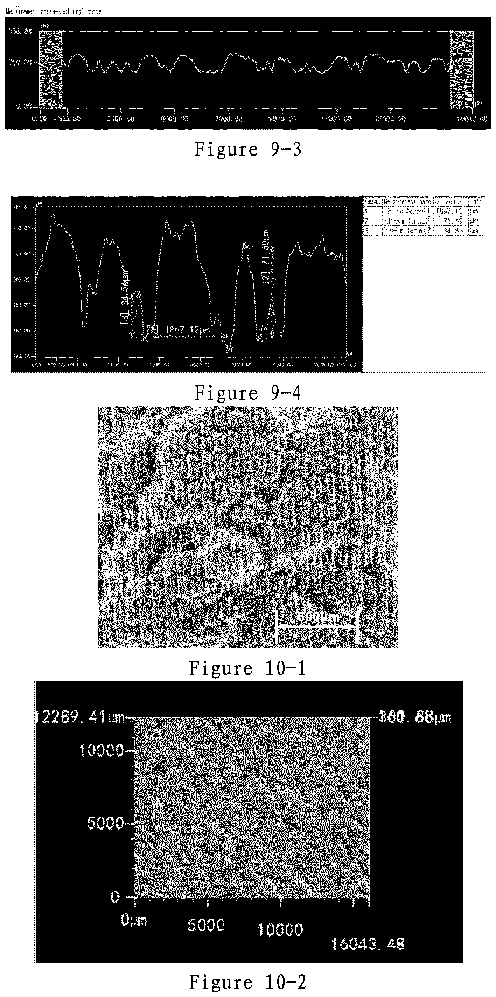

Figure 9-3: A common animal skin pattern, a cross-sectional curve of a microweb formed by small bumps.
Figure 9-4: A common animal skin pattern, a curve of the partially enlarged cross section of a microweb formed by small bumps (the small peak at the top of the curve is the cross section formed by the small bumps).
Figure 10-1: Small prismatic protrusions with a set spacing of 100 µm, black and white picture.
Figure 10-2: An animal skin pattern with ridge-like protrusions, with the spacing between the protrusions being 100 µm.

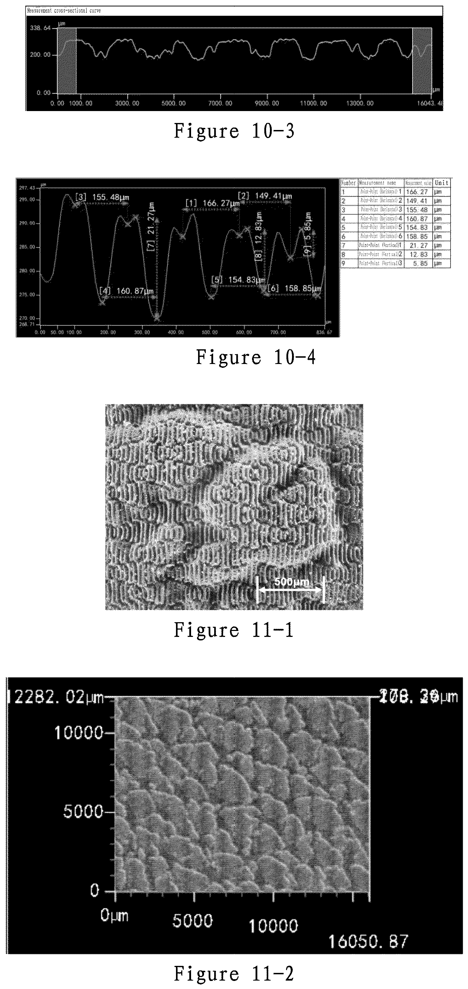

Figure 10-3: An animal skin pattern with ridge-like protrusions, with the spacing between the protrusions being 100 µm, (single-line surface drop scan).
Figure 10-4: An animal skin pattern with ridge-like protrusions, partial enlargement, spacing between the protrusions of 100 µm; appearance with a set spacing of 70 µm.
Figure 11-1: Process spacing set to 70 µm, the black and white appearance. Figure 11-2: Process spacing set to 70 µm.

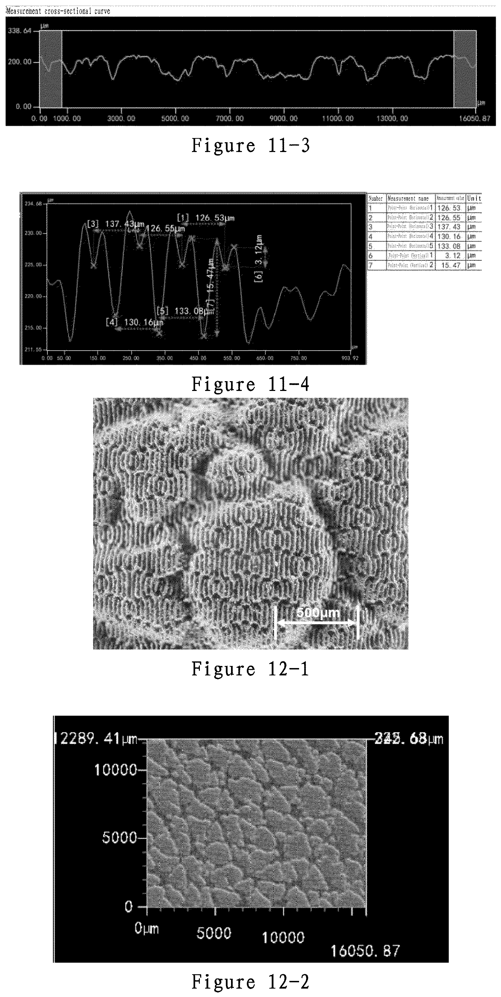

Figure 11-3: Process spacing set to 70 µm (single-line surface drop scan).
Figure 11-4: Process spacing set to 70 µm (single-line surface drop scan, enlarged image); process spacing set to 50 µm.
Figure 12-1: Process spacing set to 50 µm, black and white appearance.
Figure 12-2: Process spacing set to 50 µm.

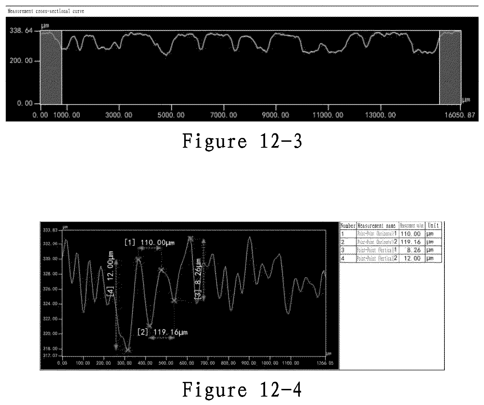

Figure 12-3: Process spacing set to 50 µm (single-line surface drop scan).
Figure 12-4: Process spacing set to 50 µm (single-line surface drop scan, enlarged image).

### Detailed description of the invention

The inventors of the present application surprisingly found that the skin of the present invention can be prepared using a thermoplastic composition comprising a thermoplastic elastomer and a compatible resin by an injection molding process using a mold having micro-texture on the inner surface, the micro-texture being recessed inwardly to form protrusions on surface of the skin. The skin obtained according to the technical solution of the present invention exhibits a good soft touch, which is specifically manifested in improved dynamic/static friction coefficients and maximum acceleration.

### Injection molding process

In the injection molding process of the present invention, a mold having a micro-texture on the inner surface is used. The texture features on the mold correspond to the concave and convex characteristic points on the product surface and are opposite. As the molten resin fills the mold cavity, it replicates the surface texture. If the texture on the mold is concave, the texture of the injection molded product will be convex, and vice versa.

After many rounds of verifications and studies, the dimensions of the microscopic protrusions have the following characteristics: 1) meeting the processing capability of existing ordinary laser equipment, 2) providing a suitable smooth and soft touch, 3) meeting the wear resistance standards of conventional automotive interiors; 4) meeting the conventional heat resistance and UV resistance requirements of automotive interiors; 5) not damaging the micro-texture features during the demolding process of the protrusions, and 6) the surface texture features having a macroscopic visual effect similar to that of the real material or fabric being imitated, such as chamois, frizzled feather or microfiber cloth.

The specific analysis is as follows:
1) Meeting the processing capability of existing ordinary laser equipment
   The existing laser spot diameter is about 30 to 50 µm. Therefore, the spacing is not recommended to be less than 30 µm. If the spacing is too small, higher precision processing equipment is required, and the investment cost of a single device is too high, which is not realistic at present.
2) Providing a suitable smooth and soft touch
   The height of the microscopic protrusions should be within a certain range to provide a noticeable soft touch, specifically a certain rebound in response to finger pressure. They would readily fall over when fingers pass over them and return to their original position in time. The top should be delicate to minimize the contact area with fingers. Therefore, we recommend a height range of 20 to 400 µm.
3) Meeting the wear resistance standards of conventional automotive interiors The micro-texture structure on the surface needs to have a certain strength to meet the wear resistance requirement of Taber 500g, 500 times. That is, after friction, there is no obvious damage on the surface.
4) Meeting the conventional heat resistance and UV resistance requirements of automotive interiors
   The heat storage requirement of 500 hours at 120°C shall be met, and the microscopic protrusions on surface would not fall over, melt, change color or have obvious signs of deterioration. Under the ultraviolet resistance standard SAE J 2412, 1240Kj energy irradiation, the microscopic protrusions meet the requirements of no falling over, no powdering, no cracking, and a color difference ΔE≤3.
5) Not damaging the micro-texture features during the demolding process of the protrusions
   The micro-protrusions have a demolding angle of more than 5°, which can ensure a smooth demolding and that the surface of the micro-protrusions will not be damaged during demolding.
6) The surface texture features having a macroscopic visual effect similar to that of the real material or fabric being imitated, such as chamois, frizzled feather or microfiber cloth

The details of microscopic protrusions can be slightly adjusted to better simulate the characteristics of real materials or fabrics, for example, features composed of numerous mutually independent microscopic protrusions, and features similar to apple pattern leather. Some of the microscopic protrusions are connected in the middle and at the bottom to form a mountain shape, which will achieve a chamois - like effect.

According to the above theoretical design and experimental development in combination with some tested preferred embodiments of the present invention, the structure of the microscopic protrusions is as follows:
According to a preferred embodiment of the present invention, it is characterized in that the height of the microscopic protrusions ranges from 20 to 400 µm, preferably from 40 to 250 µm.

According to a preferred embodiment of the present invention, it is characterized in that the width or diameter of the bottom of the microscopic protrusions is 10 to 300 µm, preferably 30 to 200 µm.

According to a preferred embodiment of the present invention, it is characterized in that the microscopic protrusions are papillary protrusions, which have a smaller width or diameter near the top, the width or diameter near the top is 3 to 50 µm, preferably 5 to 30 µm.

According to a preferred embodiment of the present invention, it is characterized in that the microscopic protrusions are uniformly distributed protrusions.

According to a preferred embodiment of the present invention, it is characterized in that the spacing between the microscopic protrusions is 30 to 400 µm.

According to a preferred embodiment of the present invention, it is characterized in that the spacing between the tops of the microscopic protrusions is 50 to 300 µm.

According to a preferred embodiment of the present invention, it is characterized in that the spacing between the bottoms of the microscopic protrusions is 30 to 300 µm.

Chemical etching and laser engraving can be used to process micro-textures on the inner wall of the mold. The laser engraved micro-texture provides better controllability.

With regard to the mold steel, it is recommended to use models with a higher strength, which can achieve less loss of the micro-texture during the long-term injection molding process. For example, the steel type that can be used is 2783HH, or type having a higher strength. The micro-texture surface layer formed in the mold cavity can be further strengthened, for example, a chromium nitride coating or diamond-like coating is provided.

For the injection molding process, a higher mold temperature can achieve less fluidity loss of the material filled into the mold cavity, which is conducive to replicating the microscopic texture features; while the molding cycle should also be considered; and it is generally recommended that the mold temperature be controlled between 20 and 90°C. For the micro-texture cleaning inside the mold cavity, cleaning is performed according to the frequency of use and the appearance status of the product.

According to a preferred embodiment of the present invention, it is characterized in that the thickness of the base layer is 0.5 to 1.5 mm in the absence of a blowing agent in the material for forming the skin. According to a preferred embodiment of the invention, it is characterized in that the material comprises a blowing agent. According to a preferred embodiment of the present invention, it is characterized in that the thickness of the base layer is 0.5 to 5 mm in the case of foaming. According to a preferred embodiment of the present invention, it is characterized in that the material further comprises a blowing agent for forming micropores in the skin.

The blowing agent, in 1-5 weight%, is uniformly mixed with the skin raw material, added into the screw of the injection molding machine, and heated, plasticized, dispersed and compressed in the screw of the injection molding machine. The blowing agent decomposes to form gas nucleus, which does not expand under the high-pressure extrusion of the screw. Then it is injected into the mold cavity at a high speed through the screw. Then, in the mold cavity, when the middle layer of the skin has not been completely cooled, the mold is slightly opened by 0.5 to 5 mm. In the space obtained by opening of the mold, the air nucleus in the uncooled material in the middle of the skin will expand and foam, thereby promoting the expansion of the middle layer, and forming a foaming layer after cooling in the middle. The skin and the microscopic papillae contact the mold cavity early, thus they crust and solidify, and there will be no pores on the surface. This creates a sandwich structure with a micro-foam layer in the middle and skin layers on both sides. The soft touch of the skin upon pressing is significantly improved.

The blowing agent is a blowing agent commonly used in the field of polymer processing, including, for example, zinc stearate, stearic acid, zinc oxide, urea, azodicarbonamide, dinitroso-1,5-pentanediamine, p-toluenesulfonyl hydrazide, p,p'-oxybis(benzenesulfonyl hydrazide) or sodium bicarbonate.

### Thermoplastic composition

The thermoplastic composition of the present invention comprises 20-97 wt%, preferably 30-80 wt%, preferably 60-90 wt% of the thermoplastic elastomer and 0-70 wt%, preferably 20-50 wt%, preferably 3-10 wt% of the compatible resin.

The lower limit of the amount of the thermoplastic elastomer can be 20 wt%, 21 wt%, 22 wt%, 23 wt%, 24 wt%, 25 wt%, 26 wt%, 27 wt%, 28 wt%, 29 wt%, 30 wt%, or 31 wt%, 32 wt%, 33 wt%, 34 wt%, 35 wt%, 36 wt%, 37 wt%, 38 wt%, 39 wt%, 40 wt%, or 41 wt%, 42 wt%, 43 wt %, 44 wt%, 45 wt%, 46 wt%, 47 wt%, 48 wt%, 49 wt%, 50 wt%, 51 wt%, 52 wt%, 53 wt%, 54 wt%, 55 wt%, 56 wt%, 57 wt%, 58 wt%, 59 wt%, 60 wt%; and the upper limit of the amount can be 97 wt%, 96 wt%, 95 wt%, 94 wt%, 93 wt%, 92 wt%, 91 wt%, 90 wt%, 89 wt%, 88 wt%, 87 wt%, 86 wt%, 85 wt%, 84 wt%, 83 wt%, 82 wt%, 81 wt%, 80 wt%; and the amount can be any range constituted by each lower limit value and each upper limit value, for example 22 wt% to 84 wt%, 45 wt% to 91 wt%, etc.

The weight average molecular weight of the thermoplastic elastomer is from 23,000 to 33,000, preferably from 25,000 to 31,000, preferably from 27,000 to 29,000, in particular 28,000 Daltons.

The thermoplastic elastomer has a melt index of 6.9 to 10.5 g/10 min, preferably 7.6 to 9.5 g/10 min, preferably 8.2 to 8.8 g/10 min, especially 8.5 g/10 min, measured at 220° C. and 2.16 Kg according to ISO 1133.

The viscosity number of the thermoplastic elastomer measured according to ISO 307 is 67 to 135 ml/g, preferably 85 to 100 ml/g. A suitable elastomer viscosity number helps the material better replicate the micro-texture features on the mold. If the viscosity number is too high, the micro-texture cannot be completely replicated, and the material cannot fully enter the small holes in the mold, resulting in the loss of texture characteristics on the surface. If the viscosity number is too low, the material will enter the smaller micropores of the mold, and these micropores are often tiny cracks formed on the cavity surface during the skin pattern processing with the mold by laser or chemical corrosion. If the skin replicates these tiny features, which form tiny hairs on the surface of the skin, these hairs will fall over during heat storage or exposure to strong sunlight and will not recover, causing the gloss to change. At the same time, the scratch resistance of the skin surface will also be reduced.

The thermoplastic elastomer has a tensile strength of 22 to 32 MPa, preferably 25 to 31 MPa, preferably 26 to 29 MPa, in particular 28 MPa, measured according to ISO 527-1.

The thermoplastic elastomer has an elongation at break of 630% to 920%, preferably 720% to 890%, preferably 740% to 830%, in particular 800%, measured according to ISO 527-1.

The thermoplastic elastomer has a Shore D hardness of 25 to 38, preferably 28 to 36, preferably 30 to 34, in particular 33, measured according to ISO 868 15s.

The lower limit of the amount of the compatible resin can be 0 wt%, 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%; and the upper limit of the amount can be 70 wt%, 69 wt%, 68 wt%, 67 wt%, 66 wt%, 65 wt%, 64 wt%, 63 wt%, 62 wt%, 61 wt%, 60 wt%, 59 wt%, 58 wt%, 57 wt%, 56 wt%, 55 wt%, 54 wt%, 53 wt%, 52 wt%, 51 wt%, 50 wt%, 49 wt%, 48 wt%, 47 wt%, 46 wt%, 45 wt%, 44 wt%, 43 wt%, 42 wt%, 41 wt%, 40 wt%, 39 wt%, 38 wt%, 37 wt%, 36 wt%, 35 wt%, 34 wt%, 33 wt%, 32 wt%, 31 wt%, 30 wt%, 29 wt%, 28 wt%, 27 wt%, 26 wt%, 25 wt%, 24 wt%, 23 wt%, 22 wt%, 21 wt%, 20 wt%, 19 wt%, 18 wt%, 17 wt%, 16 wt%, 15 wt%, 14 wt%, 13 wt%, 12 wt%, 11 wt%, 10 wt%; and the amount can be any range constituted by each lower limit value and each upper limit value, for example, 2 wt% to 53 wt%, 11 wt% to 47 wt%, etc.

The compatible resin has a weight average molecular weight of 8,000 to 12,000, preferably 8,500 to 11,000, preferably 9,000 to 10,500, especially 10,000 Daltons.

The viscosity number of the compatible resin is 82±15 ml/g, 90±15 ml/g, 100±15 ml/g, 115±15 ml/g, 118±15 ml/g, 120±15 ml/g, in particular 105±15 ml/g, measured according to ISO 307.

The compatible resin has a tensile strength of 31 to 46 MPa, preferably 35 to 43 MPa, preferably 38 to 41 MPa, in particular 40 MPa, measured according to ISO 527-1.

The compatible resin has an elongation at break of 35 to 56%, preferably 45 to 53%, preferably 48 to 51%, in particular >50%, measured according to ISO 527-1.

The compatible resin has a Shore D hardness of 50 to 80, preferably 55 to 70, preferably 62 to 68, in particular 65, measured according to ISO 868 15s.

The elastomers mentioned above need to be modified before they can be used conveniently. Typical formula of modified thermoplastic elastomer is: thermoplastic elastomer, compatible resin, plasticizer, filler, antioxidant, anti-ultraviolet agent, internal lubricant, color powder, etc.

The modified thermoplastic elastomer has a melt index of 230 to 350 g/10 min, preferably 240 to 320 g/10 min, preferably 245 to 290 g/10 min, in particular 250 g/10 min, measured at 220°C and 2.16 Kg according to ISO 1133.

The modified thermoplastic elastomer has a tensile strength of 6.3 to 9.2 MPa, preferably 7.1 to 8.8 MPa, preferably 7.5 to 8.5 MPa, in particular 8 MPa, measured according to ISO 527-1.

The modified thermoplastic elastomer has an elongation at break of 480% to 700%, preferably 490% to 690%, preferably 520% to 650%, in particular 600%, measured according to ISO 527-1.

The modified thermoplastic elastomer has a Shore D hardness of 53 to 80, preferably 60 to 76, preferably 65 to 72, and in particular 70, measured according to ISO 868 15s.

The plasticizer is selected from the group consisting of dioctyl terephthalate, trioctyl trimellitate, dioctyl phthalate, dibutyl phthalate, dinonyl phthalate, diisononyl phthalate, diisodecyl phthalate, dioctyl adipate, tributyl acetyl citrate, dioctyl sebacate, pentaerythritol esters, synthetic vegetable esters, chlorinated paraffins, metallocene polyolefins, epoxidized soybean oil, white oil, and combinations thereof.

The filler is selected from the group consisting of talc, white carbon black, diatomite, bentonite, calcium carbonate, calcium oxide, magnesium carbonate, barium sulfate, light calcium carbonate, nano zinc oxide, anhydrous calcium sulfate, calcium hydroxide, clay, ceramic microbeads, kaolin, magnesium oxide, magnesium hydroxide, calcium oxide, aluminum oxide, aluminum hydroxide, perlite, wollastonite, hydrotalcite, zinc sulfide and combinations thereof.

The antioxidant is selected from the group consisting of hindered phenol antioxidants, hindered amine antioxidants, aromatic secondary amine antioxidants, thioester antioxidants, phosphite ester antioxidants, phosphorous acid antioxidants, thioether antioxidants, nitrogen oxide resistant antioxidants and combinations thereof.

The light stabilizer is selected from the group consisting of hindered amines, benzotriazoles, titanium dioxide, light shielding agents, ultraviolet absorbers, quenchers, benzophenones, triazines, salicylates, substituted acrylonitrile, oxamides, organic nickel compounds and combinations thereof.

The ultraviolet light absorber is selected from the group consisting of oxanilides, benzophenones, benzotriazoles, benzotriazines, salicylates, benzophenones, substituted acrylonitrile and combinations thereof.

The internal lubricant is selected from the group consisting of silicone, acetyl sulfonamide, fatty acid amide, polyethylene oxide, ethylene-acrylic acid copolymer, polylactic acid, polyethylene wax, calcium stearate, stearic acid, butyl stearate, polyethylene wax, low molecular weight polypropylene, polypropylene wax, peroxy polyethylene wax, sodium stearate, zinc stearate, stearate polymers and combinations thereof.

The color powder is selected from the group consisting of benzimidazolone, DPP red, quinacridone, phthalocyanine blue, anthraquinone, carbon black, titanium dioxide, iron oxide series color powder, lead chromate series color powder, organic color powder such as phthalocyanine blue color powder or ultramarine color powder, inorganic color powder such as iron oxide red, iron oxide black or chrome green, composite color powder such as iron oxide orange or sea blue powder, and combinations thereof.

The proportion of thermoplastic elastomer is 20 to 97%, preferably 30 to 80%, preferably 60 to 90%, preferably 80 to 90%, preferably 80 to 85%. The compatible resin refers to a thermoplastic resin whose polarity matches that of the main elastomer, and its proportion is 0 to 70%, preferably 3 to 10%, preferably 6 to 10%, preferably 20 to 50%. The plasticizer is used to improve the fluidity of the entire system, and its proportion is 0 to 40%, the proportion of the filler is 0 to 10%, the proportion of the antioxidant is 0.05 to 0.3%, the proportion of the anti-ultraviolet agent is 0.05 to 0.3%, the proportion of the internal lubricant is 0.1-3%, and the proportion of the color powder is 0 to 2%.

The above components are all expressed in percentage by mass, and the total percentage by mass is 100%.

The present invention further provides a technical solution based on thermoplastic styrene elastomer and thermoplastic polyester elastomer, wherein a typical formula of the thermoplastic styrene elastomer is exemplified as follows: it comprises the following components in percentage: 30 to 80% of a hydrogenated styrene-butadiene block copolymer, 20 to 50% of polypropylene, 2 to 20% of white oil as plasticizer, 0.1 to 5% of talc powder as filler, 0.1 to 0.6% of a hindered phenol as antioxidant, 0.1 to 0.4% of a hindered amine as light stabilizer, 0.1 to 0.5% of benzotriazole as ultraviolet absorber, 0.5 to 2% of a silicone masterbatch, and 0.5 to 2% of a color powder.

In addition, a typical formula of the thermoplastic polyester elastomer is exemplified as follows: it comprises the following components in percentage: 60 to 90% of a block copolymer of polybutylene terephthalate and polyether terephthalate, 3 to 10% of nylon 610, 2 to 8% of trioctyl trimellitate as plasticizer, 0.1 to 0.5% of talc as filler, 0.1 to 0.6% of a hindered phenol as antioxidant, 0.1 to 0.4% of a hindered amine as light stabilizer, 0.1 to 0.5% of benzotriazole as ultraviolet absorber, 0.5-2% of a silicone masterbatch, and 0.5 to 2% of a color powder.

In the thermoplastic composition of the present invention, the thermoplastic elastomer is selected from the group consisting of thermoplastic polyurethane elastomer, thermoplastic polyester elastomer, thermoplastic polystyrene elastomer, thermoplastic vulcanizate (TPV) elastomer, thermoplastic polyamide elastomer, thermoplastic 1,2-polybutadiene elastomer, thermoplastic trans-1,4-polyisoprene elastomer, thermoplastic ethylene-vinyl acetate elastomer, blended thermoplastic elastomer of polyethylene and ethylene-vinyl ester copolymer, thermoplastic ethylene-octene copolymer elastomer, thermoplastic ethylene-styrene copolymer elastomer, EPDM rubber-based thermoplastic elastomer, blended thermoplastic elastomer of polyethylene and natural rubber, blended thermoplastic elastomer of polyethylene and hydrogenated styrene butadiene rubber, or combinations thereof.

Thermoplastic elastomers are polymers that have the physical properties of elastomers (such as a wide range of reversible elongation), and compared with general-purpose elastomers (rubbers), they can also be processed like thermoplastics. Thermoplastic elastomers rely on a physical cross-linking process (i.e., intermolecular attraction) to form a three-dimensional network structure to prevent viscoelastic flow.

Thermoplastic elastomers are structurally heterogeneous copolymers, which are composed of two or more thermodynamically incompatible covalently bonded segments or blocks. Physical irreversible crosslinking is the result of phase separation of incompatible segments. One phase is composed of blocks characterized by a glass transition temperature or melting point that is acceptable above the useful temperature range of the thermoplastic elastomer, and is referred to as the "hard" phase. The other phase is composed of blocks characterized by a glass transition temperature much lower than the useful temperature of the thermoplastic elastomer, and is referred to as the "soft" phase. The basic structural unit of thermoplastic elastomers is A-B-A, where A is the hard thermoplastic phase segment and B is the soft elastomeric phase segment. The unique molecular structure type can meet the structural requirement of thermoplastic elastomers. For example, one type is a simple triblock copolymer like poly(styrene-b-diene-b-styrene); another type has an elastomer backbone with randomly distributed hard block chain units grafted onto it; finally, segmented block copolymers with the general structure (A-B)ₙ represent another type of structural variation.

Thermoplastic polyurethane elastomers have the excellent mechanical properties just like other solid polyurethane elastomers (such as castable and injectable liquids and mixable rubbers). These properties enable such less materials to be used where non-polyurethane materials cannot be used, and enable thermoplastic polyurethane elastomers to have an advantage in many applications. Compared with other important types of polyurethanes, the plasticity and high polarity of thermoplastic polyurethane elastomers allow the use of different processing methods commonly used in the plastic processing industry, including mixing, internal mixing, calendering, extruding, molding [injecting, compressing, transferring, centrifuging (powder), blow molding] and solution processing. The outstanding advantage of thermoplastic polyurethane elastomers is that they can be processed into elastomer products without curing (cross-linking), so that the leftover material generated by thermoplastic polyurethane elastomers in the product manufacturing process can be reused.

Thermoplastic polyester elastomers are another thermoplastic elastomers with segmented block copolymer structure based on polyester hard block segments. The polyester blocks in this type of polymers usually have a regular structure and can be involved in phase separateion into crystalline microdomains, so that the intermolecular attraction between the hard phase chain block segments reaches the maximum value. These crystalline microdomains make the amorphous elastomeric segments physically crosslink. These materials retain their integrity when the temperature approaches the melting point of the microcrystals and begin to flow only at higher temperatures and shear stresses during thermoplastic processing.

Thermoplastic polystyrene elastomers can be exemplified by the S-E-S structure, where the S represents polyethylene block, which is phase separated from the E representing an elastomer block. If the main constitution is elastomer, then in the morphological structure of the polymer, polystyrene ends are formed as separate spherical domains, that is, the domain structure [or microdomain] is dispersed in the elastomer continuous phase. These polystyrene microdomains harden at room temperature and act as physical cross-linking points, connecting the elastomer middle blocks the into a three-dimensional network structure. In a sense, it is similar to the network structure generated by vulcanization with the sulfur for ordinary rubber as cross-linking agent. The difference lies in that when heated or dissolved in an organic solvent, the microdomains of the thermoplastic elastomer lose their strength and the polymer or its dissolved product is in a fluid state, and when it is cooled or the solvent evaporates, the microdomains harden and the network structure returns to its original state.

Thermoplastic vulcanizate is also named as Thermoplastic Dynamic Vulcanizate. The word "dynamic" more specifically describes the process of producing this thermoplastic vulcanizate - dynamic vulcanization. This process refers to the vulcanization of rubber during the melt blending of rubber and thermoplastic. As it should be, while the rubber is being vulcanized, it is also continuously mixed with the thermoplastic. Therefore, the vulcanized rubber is distributed as a dispersed phase in the continuous phase of the thermoplastic.

Thermoplastic vulcanizate (TPV) elastomers comprise a blend of a dynamically cured elastomer and a thermoplastic resin, wherein the elastomer is dispersed in the thermoplastic resin phase as finely divided elastomer particles. TPVs advantageously exhibit many of the properties of thermoset elastomers, yet are processable like thermoplastics. Elastomers commonly used to form TPVs are ethylene, alpha-olefin, and diene rubber copolymers, such as ethylene, propylene and diene monomer ("EPDM") rubber. EPDM produced using a Ziegler-Natta catalyst has been preferred for making TPV due to its high molecular weight (as measured by its Mooney viscosity). However, a higher Mooney viscosity of the rubber (e.g., greater than 200 ML (1+4 at 125° C.)) may cause difficulties when processing the rubber. Therefore, extender oil is typically added to the polymer manufacturing process to reduce the apparent viscosity, and commercially available EPDM rubbers having a very high molecular weight typically comprise from about 50 to about 125 phr of an extender oil. While this facilitates extrusion of EPDM, oil-extended EPDM is usually provided in bale form. Therefore, such an additional step is required in TPV production to pelletize and disperse the rubber. This increases the complexity of the operation and may require the addition of large amounts of extender fillers and/or dispersants such as clay. However, dispersants such as clay are high-density materials, and thus the addition of a large amount of clay results in an increase in the density of the TPV.

Thermoplastic polyamide elastomers are composed of regular linear rigid polyamide segments separated by flexible polyether segments, wherein polyamide segments PA and polyether segments PE are present. The elastomer is essentially a multi-block copolymer having the general structure (AB)ₙ, wherein the hard segment can be a partially aromatic polyamide or aliphatic polyamide. Polyesteramide (PFA) or polyetheresteramide (PEEA) can be obtained from aromatic polyamides, while the hard segment of polyether block amide (PEBAX or VES-TAMID) can be derived from aliphatic amides. In PEEA and PEBA, the aliphatic polyether soft segment is connected to the hard segment through an ester group. All thermoplastic polyamides have the following characteristics: excellent toughness and flexibility without plasticizers and at low temperatures, low density, high dimensional stability, easy processing on traditional plastic equipment, good chemical resistance, good resistance to environmental stress cracking, good resilience and dynamic performance. These properties will vary with block length and block properties.

The thermoplastic 1,2-polybutadiene elastomer is a 1,2-polybutadiene prepared by solution polymerization of butadiene in the presence of cobalt dihalide-trialkylaluminum-water, wherein the 1,2-structure content is 91% and the cis-1,4-structure content is 9%. In the 1,2-unit, the syndiotactic content is 51%-60%, and the heteroregular stereotriad content is 34%-49%. When the cobalt triacetylacetonate-triethylaluminum-carbon disulfide catalyst system is used, the syndiotactic-1,2-content can be increased to 99.7%, and the melting point of the obtained material reaches 208°C.

Thermoplastic trans-1,4-polyisoprene elastomer is an isomer of natural rubber. Balata gum and eucommia gum are two natural rubbers composed of trans-1,4-units, with a trans content of 90.6%, a cis content of 7.7%, a 3,4-content of 1.7%, and a weight-average molecular weight Mw of about 3.2×10⁵g/(g·mol). The thermoplastic behavior of the material is due to the presence of crystals with a melting point of 63 °C.

Thermoplastic ethylene-vinyl acetate elastomers are obtained by modifying polyethylene with vinyl acetate to reduce its crystallinity, thereby achieving many characteristics of thermoplastic elastomers. In this type of material, the crystalline phase acts as a hard block. In fact, varying the amount of vinyl acetate (VA) can produce materials ranging from thermoplastic elastomers to rubbers. Among the typical physical properties of such elastomers, as the vinyl acetate content decreases, the melt index decreases, while the tensile strength, elastic modulus and hardness increase. Furthermore, the improved properties are also associated with higher crystallinity.

Blended thermoplastic elastomer of polyethylene and ethylene-vinyl ester copolymer is prepared from polyethylene and ethylene-vinyl ester copolymer using electron beam technology. This technology can eliminate the disadvantages of dynamic vulcanization in the mixer and even achieve continuous and uniform vulcanization when making complex products. Films made from this blend have permanent deformation and reprocessability. The reprocessability is achieved by remixing at 130°C for 4 minutes and remolding at 150°C for 2 minutes. Even under such cyclic processing, most of the properties of the blend remain unchanged. Experiments have shown that when this blend is made into a heat shrinkable film, as the crystallinity percentage increases, its heat shrinkage increases and its memory loss decreases. It can be considered that due to these advantages, electron beam crosslinking has gained an important position in rubber vulcanization.

The most common thermoplastic ethylene-octene copolymer elastomer is the Engage polyolefin elastomer produced and supplied by DuPont Dow Elastomers Company in the United States, which is an ethylene-octene copolymer prepared using the INSITE catalyst. Its process technology can perform very specific control over polymer structure, properties and rheology (DuPont Dow, 1999). By changing the ratio of ethylene to octene, polymer materials ranging from rubber to thermoplastic elastomers can be produced. For example, the DSC melting points of polymers with octene contents of 25%, 19% and 14% are 55°C, 76°C and 95°C respectively. This copolymer has a wide range of solid-state structures from highly lamellar morphology to low-crystallinity tassel-shaped micelle morphology. Its physical properties can be regulated by the structure of the copolymer, and it plays a bridging role between plastics and rubbers.

Thermoplastic ethylene-styrene copolymer elastomers are the ethylene-styrene copolymers produced by copolymerizing ethylene and styrene using the INSETE technology provided by Dow Elastomers. The polymers with a styrene content of up to 50% are semi-crystalline. At room temperature, the stress-strain behavior of low-crystallinity polymers shows the characteristics of an elastomer with a low initial modulus, and under higher strains, the slope of the stress-strain curve gradually increases, while achieving a larger instantaneous recovery. The origin of the elastic behavior in this elastomer can be attributed to the entangled network of flexible chains attached to the tassel-like micellar crystals. Polymers with a styrene content (mass fraction) of greater than 80% are amorphous.

EPDM-based thermoplastic elastomers specifically refer to soft thermoplastic elastomers made by blending polyethylene with EPDM. Studies on their crosslinking and crystallization behaviors reveal that when the EPDM content is high, the heat of fusion, crystallinity, melting point and entropy change of the blend will decrease, the crosslinking of the blend will further decrease the above properties, and the crosslinked gel fraction or crosslinking degree will increase with the increase of the EPDM/PE ratio.

Further improvements involve the preparation of thermoplastic elastomers by silane grafting of EPDM and PE. It is said that this silane crosslinked system generally has a higher dynamic elastic modulus at any temperature than the crosslinking agent dicumyl peroxide (DCP). When the degree of crosslinking is the same, the network generated by silane crosslinking has a higher deformation resistance during dynamic shear than DCP. Although the silicon-modified system achieves a tensile strength and elongation at break of the product slightly inferior to those of the peroxide crosslinked system under the same gel fraction condition, its high-temperature performance, especially the thermal elongation, is better. Since silicon crosslinked materials have a higher Si-O-Si chain bond energy and the formation of a three-dimensional network structure, they show greater advantages in anti-oxidative degradation and air aging stability.

The blended thermoplastic elastomer of polyethylene and natural rubber is developed based on the preparation of a thermoplastic elastomer similar to Santoprene by mixing a natural rubber with a high melting point plastic such as polypropylene. Bhowmick (1999) reported a series of thermoplastic elastomers from modified polyethylene. One of the key points in the report is that morphology plays an extremely important role in determining properties. For example, thermoplastic elastomers with the same properties can be obtained from recycled rubbers and plastics, although the properties of individual recycled systems are inferior to those of pure polymers (Nevatia et al., 1995; Naskar et al., 1999).

The blended thermoplastic elastomers of polyethylene and hydrogenated styrene butadiene rubber are a series of new thermoplastic elastomers blended from hydrogenated styrene butadiene rubber (HSBR) and polyethylene (PE) recently reported by De Sarkar et al. (1999). Although other measurements show that there is a certain degree of miscibility between HSBR and PE, this blend still shows a two-phase layered structure. The transition temperatures observed for polyethylene are 64°C, -6°C and - 108°C; for HSBR they are -18°C and -106°C. The thermoplastic elastomer prepared from the blend shows a decreased tanδ peak compared to HSBR. When HSBR is added, the α-transition temperature (64°C) of PE shifts to a higher temperature zone, and the tanδ peak value also rises. In this temperature zone, the E' value of the thermoplastic elastomer is between PE and HSBR. X-ray analysis shows that the interplanar spacing of PE increased with the addition of PE, indicating that HSBR significantly migrates into the interchain space of PE. Compared with general purpose rubber, the tensile strength, elongation at break, tensile stress at a given elongation, permanent deformation and hysteresis loss of this blend are excellent. This thermoplastic elastomer can be reprocessed. Interestingly, when LDPE is replaced by HSBR or HSBR is replaced by SBR, the mechanical properties deteriorate, which can be explained by the changes in the interaction among morphology, crystallization and composition.

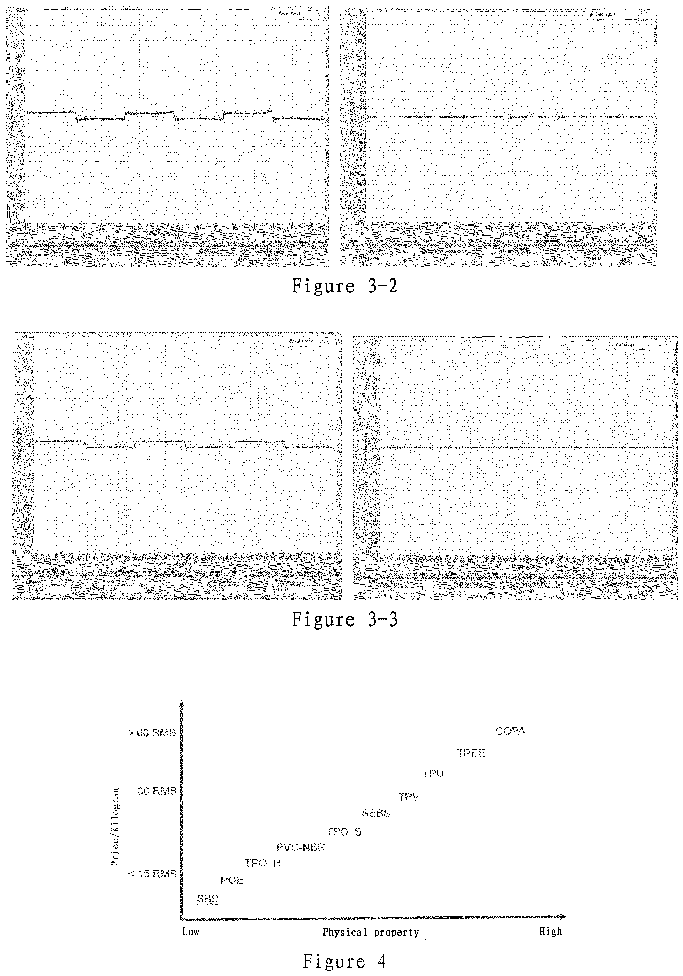

For thermoplastic elastomers, the thermoplastic elastomers listed above are all feasible, but considering the application in automobiles, it is recommended to choose types with moderate physical properties and price, and thus SEBS, TPV, TPU and TPEE types are generally recommended. For the relationship between the physical properties and cost of common thermoplastic elastomers, please refer to Fig. 4.

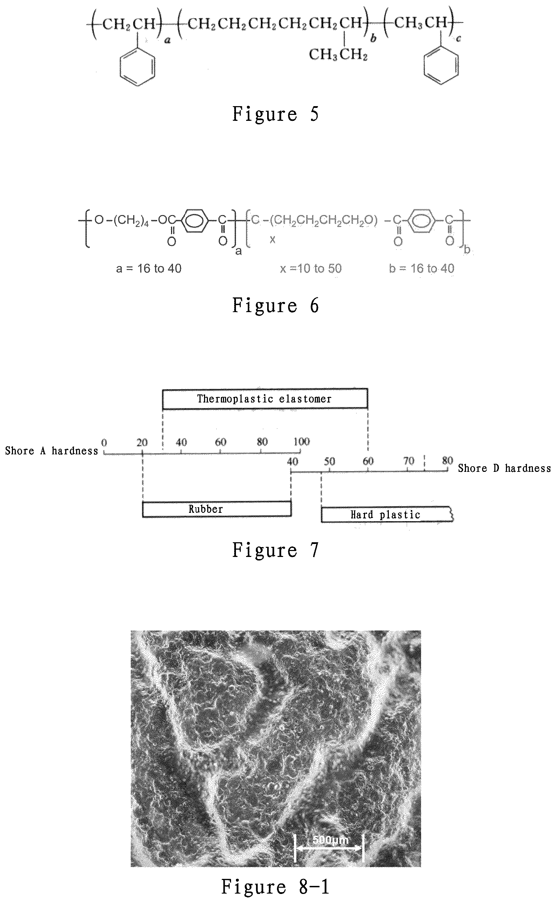

The molecular structure of the SEBS thermoplastic elastomers is as follows: for conventional SEBS elastomers, the a and c of the hard segments in the molecular chain are 50 to 80, and the b of the soft segment is 20 to100. In view of the characteristics of the parts in automobile, medium to low molecular weight types are preferred, such as a, c = 55 to 70, and b = 40 to 80; wherein the molecular weight is mainly distributed in the range of a, c = 60 to 65, and b = 50 to 70. The specific structure of the SEBS thermoplastic elastomer is preferably as shown in Fig. 5 (a, c = 50 to 80, b = 20 to 100).

The molecular structure of the TPEE thermoplastic elastomers is as follows: for conventional TPEE elastomers, the a of the hard segment in the molecular chain is 16 to 40, the b of the soft segment is 16 to 40, and the x of the polyether segment in the soft segment is 10 to 50. In view of the characteristics of the parts in automobile, medium to low molecular weight types are preferred, such as a= 20 to 30, b= 20 to 30, and x= 15 to 40; wherein the molecular weight is mainly distributed in the range of a= 25 to 30, b= 25 to 30, and x= 20 to 30. The specific structure of the TPEE thermoplastic elastomer is preferably as shown in Fig. 6.

For the hardness range of thermoplastic elastomers, the actual in-vehicle application scenarios, material molding process limitations, hand feel, etc. are taken into consideration. The Shore A hardness is preferably 40 and 90A. For information on the hardness of the thermoplastic elastomers, reference may be made to Fig. 7, which specifically describes the hardness of the thermoplastic elastomers.

### Examples

The preferred embodiments of the present invention are given below and described in detail so that a person skilled in the art can better understand the functions and features of the present invention.

We tested the skins in various states. The TPE used in the test was the solution of our preferred thermoplastic elastomer. If not otherwise specified, it was the same in the present text. The formula comprised the following components in mass percentage: 82% of a block copolymer of polybutylene terephthalate and polyether terephthalate, 10% of the nylon 610, 5% of trioctyl trimellitate as plasticizer, 0.1% of talc as filler, 0.1% of a hindered phenol as antioxidant, 0.1% of a hindered amine as light stabilizer, 0.2% of benzotriazole as ultraviolet absorber, 1.5% of a silicone masterbatch, and 1% of carbon black.

The specific properties of the block copolymer of polybutylene terephthalate and polyether terephthalate in the above formula were as follows:

| | | | |
|---|---|---|---|
| Melt index | ISO 1133 | g/10min at 220°C, 2.16Kg | 8.5 |
| Viscosity number | ISO 307 | ml/g | 110±15 |
| Tensile strength | ISO 527-1 | MPa | 28 |
| Elongation at break | ISO 527-1 | % | 800 |
| Shore D hardness | ISO 868 15s | | 33 |

The specific properties of nylon 610 in the above formula were as follows:

| | | | |
|---|---|---|---|
| Viscosity number | ISO 307 | ml/g | 105±15 |
| Tensile strength | ISO 527-1 | MPa | 40 |
| Elongation at break | ISO 527-1 | % | >50 |
| Shore D hardness | ISO 868 15s | | 65 |

The physical properties of the modified thermoplastic elastomer material of the above formula were as follows:

| | | | |
|---|---|---|---|
| Melt index | ISO 1133 | g/10min at 220°C, 2.16Kg | 250 |
| Viscosity number | ISO 307 | ml/g | 90±15 |
| Tensile strength | ISO 527-1 | MPa | 8 |
| Elongation at break | ISO 527-1 | % | 600 |
| Shore D hardness | ISO 868 15s | | 70 |

No. 1 was the animal skin pattern commonly used in the interior of an automobile. No. 2 was the fine texture imitating Nappa leather, which was replicated on the skin pattern template through injection molding. Nos. 5 to 10 were the papillary structure textures described in our patent application. No. 3 was Nappa leather with a coating on it. No. 4 was microfiber cloth (chamois like cloth).

**Table 1: Maximum dynamic/static friction coefficients and maximum surface acceleration for several different surface textures**

| No. | Skin kind | Material | Maximum dynamic friction coefficient | Maximum static friction coefficient | Maximum acceleration [g] |
|---|---|---|---|---|---|
| 1 | Common rough animal skin pattern template | TPE | 1.3992 | 1.7883 | 1.8584 |
| 2 | Nappa-like fine skin pattern injection-molded template | TPE | 0.4734 | 0.5379 | 0.1270 |
| 3 | Nappa-like fine skin pattern injection-molded template (with coating) | TPE | 0.4599 | 0.5108 | 0.1148 |
| 4 | Nappa leather (with coating) | Leather | 0.4768 | 0.5761 | 0.5438 |
| 5 | Chamois like cloth | Microfiber cloth | 0.8853 | 0.9388 | 0.0869 |
| 6 | Papillary structure texture, papillary height 190µm | TPE | 0.4517 | 0.4977 | 0.1201 |
| 7 | Papillary structure texture, papillary height 190µm (with coating) | TPE | 0.4051 | 0.4157 | 0.1026 |
| 8 | Papillary structure texture, papillary height 190µm | ABS resin | 1.1646 | 1.4328 | 0.9494 |
| 9 | Papillary structure texture, papillary height 80µm | TPE | 0.4719 | 0.4817 | 0.1242 |
| 10 | Papillary structure texture, papillary height 350µm | TPE | 0.4897 | 0.4901 | 0.1289 |

**Table 2: Maximum dynamic/static friction coefficients and maximum surface acceleration for several different surface textures**

| No. | Skin kind | Material kind | Maximum dynamic friction coefficient | Maximum static friction coefficient | Maximum acceleration [g] |
|---|---|---|---|---|---|
| 1 | Common rough animal skin pattern template | TPE | 1.3992 | 1.7883 | 1.8584 |
| 2 | Common rough animal skin pattern plus small bumps | TPE | 1.5438 | 1.9845 | 2.1548 |
| 3 | Prismatic protrusions, spacing 100µm; width 70µm | TPE | 1.289 | 1.6823 | 2.0387 |
| 4 | Prismatic protrusions, spacing 70µm; width 70µm | TPE | 1.1689 | 1.4786 | 1.4707 |
| 5 | Prismatic protrusions, spacing 50µm; width 70µm | TPE | 1.3475 | 1.7850 | 1.7659 |
| 6 | Prismatic protrusions, spacing 100µm; width 100µm | TPE | 1.2047 | 1.5312 | 1.4466 |
| 7 | Prismatic protrusions, spacing 100µm; width 30µm | TPE | 1.1657 | 1.4412 | 0.9579 |

What is described above is only preferred embodiments of the present invention. After understanding the technical means of the present invention, professionals familiar with this technology can naturally make changes according to actual needs under the guidance of the present invention. Therefore, all equivalent changes and modifications made according to the scope of the patent application of the present invention should still fall within the scope covered by the patent of the present invention.

## Claims

1. A skin for use in the interior of an automobile, **characterized in that** the skin comprises:
a base layer having an upper surface; and
a plurality of microscopic protrusions spaced apart and distributed on at least a part of the upper surface so that the upper surface of the base layer is configured as a suede; and
the skin is integrally formed by injection molding of a material comprising a thermoplastic elastomer and a compatible resin.

2. The skin according to claim 1, **characterized in that** the height of the microscopic protrusions ranges from 20 to 400 µm, preferably from 40 to 250 µm.

3. The skin according to claim 1, **characterized in that** the width or diameter of the bottom of the microscopic protrusions is 10 to 300 µm, preferably 30 to 200 µm.

4. The skin according to claim 1, **characterized in that** the microscopic protrusions are papillary protrusions, which have a smaller width or diameter near the top, and the width or diameter near the top is 3 to 50 µm, preferably 5 to 30 µm.

5. The skin according to claim 1, **characterized in that** the microscopic protrusions are uniformly distributed protrusions.

6. The skin according to claim 1, **characterized in that** the spacing between the microscopic protrusions is 30 to 400 µm.

7. The skin according to claim 1, **characterized in that** the spacing between the tops of the microscopic protrusions is 50 to 300 µm.

8. The skin according to claim 1, **characterized in that** the spacing between the bottoms of the microscopic protrusions is 30 to 300 µm.

9. The skin according to claim 1, **characterized in that** the thickness of the base layer is 0.5 to 5 mm.

10. The skin according to claim 1, **characterized in that** the base layer comprises micropores.

11. The skin according to claim 1, **characterized in that** the skin further comprises a coating applied on the surface of the microscopic protrusions and on the upper surface of the base layer between the microscopic protrusions.

12. The skin according to claim 11, **characterized in that** the coating comprises at least one of a waterborne polyurethane system and an acrylic system.

13. The skin according to claim 11, **characterized in that** the dry film thickness of the coating is 6 to 15 µm.

14. The skin according to claim 1, **characterized in that** the material comprises 20 to 97 weight percent of the thermoplastic elastomer and 0 to 70 weight percent of the compatible resin.

15. The skin according to claim 1, **characterized in that** the thermoplastic elastomer is at least one selected from the group consisting of: thermoplastic polyurethane elastomer, thermoplastic polyester elastomer, thermoplastic polystyrene elastomer, thermoplastic vulcanizate (TPV) elastomer, polyamide elastomer, thermoplastic 1,2-polybutadiene elastomer, thermoplastic trans-1,4-polyisoprene elastomer, thermoplastic ethylene-vinyl acetate elastomer, blended thermoplastic elastomer of polyethylene and ethylene-vinyl ester copolymer, thermoplastic ethylene-octene copolymer elastomer, thermoplastic ethylene-styrene copolymer elastomer, ethylene propylene diene monomer rubber-based thermoplastic elastomer, blended thermoplastic elastomer of polyethylene and natural rubber, and blended thermoplastic elastomer of polyethylene and hydrogenated styrene butadiene rubber; preferably at least one selected from the group consisting of: thermoplastic polyurethane elastomer, thermoplastic polyester elastomer, thermoplastic polystyrene elastomer, thermoplastic vulcanizate (TPV) elastomer, and polyamide elastomer.

16. The skin according to claim 1, **characterized in that** the compatible resin is at least one selected from the group consisting of: polyolefins, polyvinyl chloride, styrene resins, acrylic resins, polyamide resins, fluororesin, polycarbonates, polyesters, polyether, polysulfone, and polyether ketones; preferably at least one selected from the group consisting of: polyolefins, polyamide resins or combinations thereof, and more preferably polyethylene, polypropylene, and polyamide resins.

17. The skin according to claim 1, **characterized in that** the base layer comprises a three-dimensional structure formed during the injection molding process.

18. The skin according to claim 1, **characterized in that** the protrusion is configured to move between a vertical position and an inclined position, and when subjected to an external force, the protrusion moves from the vertical position to the inclined position; when the external force disappears, the protrusion returns from the inclined position to the vertical position.

19. The skin according to claim 1, **characterized in that** as measured according to the German automotive industry standard, i.e., VDA230-206 Stick-slip test standard, the maximum static friction coefficient of the skin is 0.20 to 1.70, preferably 0.40 to 1.00.

20. The skin according to claim 1, **characterized in that** the viscosity number of the thermoplastic elastomer measured according to ISO 307 is 67 to 135 ml/g, preferably 85 to 100 ml/g.

21. A component with the skin of any one of the preceding claims for use in the interior of an automobile.

22. The component according to claim 21, **characterized in that** the component further comprises a framework connected to the skin for supporting the skin.

23. The component according to claim 21, **characterized in that** the component further comprises an adhesive or foaming layer located between the framework and the skin.

24. A method for shaping an automotive interior component having a skin, the method comprising:
providing a mold having a movable mold and a fixed mold, wherein at least a part of the inner surface of the fixed mold has a plurality of micropores spaced apart and distributed;
clamping the movable mold and the fixed mold to form a cavity, and injecting a material to fill the cavity and the micropores, wherein the material comprises a thermoplastic elastomer and a compatible resin;
cooling to form the base layer of the skin from the material in the cavity, with the inner surface of the fixed mold fitting the upper surface of the base layer; and forming a plurality of microscopic protrusions spaced apart and distributed on at least a part of the upper surface from the material in the micropores so that the upper surface of the base layer is configured as a suede.

25. The shaping method according to claim 24, **characterized in that** the material further comprises a blowing agent for forming micropores.

26. The shaping method according to claim 24, **characterized in that** before injecting the material to fill the cavity and the micropores, a framework is provided on the movable mold so that the framework is accommodated in the cavity.

27. The shaping method according to claim 24, **characterized in that** the shaping method further comprises taking the skin out of the mold and then connecting the skin to the framework via an adhesive or foaming layer.
